# EUROPÄISCHE PATENTSCHRIFT

(11) **EP 2 664 421 B1**
(45) Veröffentlichungstag und Bekanntmachung des Hinweises auf die Patenterteilung: **11.10.2017**
(21) Anmeldenummer: 13167837.7
(22) Anmeldetag: 15.05.2013
(51) Int. Cl.: B25J 15/04

(54) **Mehrteiliges Werkzeug**
Multi-part tool
Outil en plusieurs parties

(30) Priorität: 18.05.2012 DE 202012101833 U
(43) Veröffentlichungstag der Anmeldung: 20.11.2013
(73) Patentinhaber: KUKA Systems GmbH, 86165 Augsburg (DE)
(72) Erfinder: Mànnich, Carsten, 86153 Augsburg (DE)
(74) Vertreter: Ernicke, Klaus Stefan

(56) Entgegenhaltungen:
- EP-A1- 1 935 580
- DE-T2- 60 204 594
- US-A1- 2002 050 537

## Beschreibung

Die Erfindung betrifft ein mehrteiliges Werkzeug und ein Werkzeugwechselsystem für mehrteilige Werkzeuge.

Die DE 37 05 884 C2 offenbart ein mehrteiliges Greifwerkzeug mit einem als Grundkörper mit beweglichen Greiferfingern ausgebildeten Werkzeugteil, wobei die Greiferfinger an den Enden wechselbare Greifbacken tragen. Die Greifbacken werden mittels Zentrierstiften formschlüssig an den Greiferfingern angesteckt und in dieser Stellung von außenseitigen Elektromagneten gehalten.

Ein ähnliches mehrteiliges Werkzeug mit Zapfenverbindung und Haltemagnet zum Ankuppeln lösbarer Greiferfinger an einem Basisteil ist aus der DE 10 2005 052 627 A1 bekannt.

Das in der DE 41 11 093 A1 gezeigte mehrteilige Greifwerkzeug zeigt ein Greifergrundteil mit einem Spannrahmen, einer Verfahreinheit und zwei Spannbackenaufnahmen, welche mit zwei Spannbacken an einer Grundplatte einer Bearbeitungsvorrichtung kuppelbar sind. Hierfür wird eine Kupplungseinrichtung nebst einer Verriegelung in Form von Federrasten mit Rastkugeln eingesetzt.

Die DE 10 2009 039 104 A1 lehrt ein anderes mehrteiliges Werkzeug mit einem Basisteil und zwei beweglichen Adaptern, an denen wechselbare Greiferfinger mittels einer Kupplungseinrichtung und einer Verriegelung aufgenommen werden können. Die Verriegelung weist einen federbelasteten und axial beweglichen Riegelbolzen auf, der formschlüssig durch eine Fensteröffnung an einer

Kupplungsplatte des wechselbaren Werkzeugteils greift. Aus der DE 602 04 594 T2 ist ein weiteres mehrteiliges Werkzeug mit einem Basisteil und einem wechselbaren Werkzeugteil bekannt,wobei das Werkzeug eine Kupplungseinrichtung mit Kupplungselementen und eine Verriegelung mit formschlüssigen Riegelelementen aufweist, wobei die Riegelelemente im beiderseitigen Eingriffsbereich eine aneinander angepasste runde Querschnittsform aufweisen, und wobei ein erstes Riegelelement als Riegelnut und ein zweites Riegelelement als axial verschiebliche Riegelstange ausgebildet ist.

Ferner zeigt die US2002 0050537 A1 ein mehrteiliges Werkzeug, mit einem Basisteil und einem wechselbaren Werkzeugteil, wobei das Werkzeug eine Kupplungseinrichtung und eine Verriegelung mit Riegelelementen aufweist, und wobei die Riegelelemente als quer zu ihrer Längsachse verschiebliche Riegelstangen ausgebildet sind.

Es ist Aufgabe der vorliegenden Erfindung, ein weiterentwickeltes und verbessertes mehrteiliges Werkzeug aufzuzeigen.

Die Erfindung löst diese Aufgabe mit den Merkmalen im Hauptanspruch.

Das beanspruchte mehrteilige Werkzeug hat den Vorteil eines einfachen, platzsparenden und kostengünstigen konstruktiven Aufbaus sowie einer verbesserten Funktionalität und einer hohen dauerhaften Betriebssicherheit. Vorteilhaft sind ferner die Verschleißfestigkeit sowie die Robustheit und Unempfindlichkeit gegenüber ungünstigen Betriebs- und Umgebungsbedingungen.

Das beanspruchte mehrteilige Werkzeug eignet sich besonders für den Anbau an eine mehrachsig bewegliche Handhabungseinrichtung und für einen vollautomatischen Betrieb. Die Kupplungseinrichtung und die Verriegelung können durch einen integrierten Antrieb oder durch Bewegungen der Handhabungseinrichtung betätigt werden. Dies kann im Zusammenwirken mit einem externen und bzgl. der Handhabungseinrichtung relativ ortsfesten Halter für das wechselbare Werkzeugteil geschehen.

Die Ausbildung der Riegelelemente als formschlüssig ineinander greifende Riegelstange und Riegelnut ist für die betriebssicherere und wenig aufwändige Verriegelung besonders günstig. Beide Riegelelemente können sich zumindest bereichsweise geschützt innerhalb der Kupplungseinrichtung und an den im Eingriff stehenden Kupplungselementen, insbesondere an einem Kupplungszapfen und an einer Kupplungsöffnung, befinden. Die Riegelstange kann nach außen überstehen und ein Anschlagelement aufweisen, welches zur externen Betätigung der federbelasteten Riegelstange mit einem relativ ortsfesten Anschlag am Halter für das wechselbare Werkzeugteil zusammenwirkt.

Eine schräg gegen die Kupplungs-Steckrichtung gerichtete Führung und Bewegungsrichtung der Riegelstange ist günstig für eine sichere Selbstverriegelung. Diese kann auch bei Ausfall eines die Riegelstange ggf. beaufschlagenden Federelements wirksam sein.

Das mehrteilige Werkzeug kann Bestandteil eines Werkzeugwechselsystems sein, welches eine magazinartige Bereitstellung und mehrere Halter für wechselbare Werkzeugteile aufweisen kann. Dies ist für einen vollautomatischen Wechsel besonders günstig. Die Halter und die wechselbaren Werkzeugteile können eine formschlüssige Führung zur definierten Positionierung und Ausrichtung sowie für einen Rückhalt der wechselbaren Werkzeugteile beim An- und Abkuppeln aufweisen. Eine beim An- und Abkuppeln vom zugeführten Werkzeug betätigbare Sicherung hält die abgekuppelten wechselbaren Werkzeugteile in einer definierter Lage und Ausrichtung und sichert diese.

Das mehrteilige Werkzeug eignet sich für beliebige Arten von Handhabungseinrichtungen. Besonders günstig ist eine Ausbildung der Handhabungseinrichtung als taktiler Roboter, wobei mit dessen belastungserfassender Sensorik die Bewegungen und Funktionen sowie auch die korrekten Positionen der zu kuppelnden Werkzeugteile überwacht werden können. Das beanspruchte mehrteilige Werkzeug hat außerdem ein geringes Gewicht, was für den Einsatz bei Leichtbaurobotern mit begrenzter Traglast von Vorteil ist.

In den Unteransprüchen sind weitere vorteilhafte Ausgestaltungen der Erfindung angegeben.

Bei einem Ausführungsbeispiel sind die Kupplungselemente der Kupplungseinrichtung als Kupplungszapfen und als Kupplungsöffnung ausgebildet. Bevorzugt ist die Kupplungsöffnung dem Basisteil und der Kupplungszapfen dem wechselbaren Werkzeugteil zugeordnet. Vorteilhafterweise können der Kupplungszapfen und die Kupplungsöffnung in Richtung einer Kupplungsachse steckbar sein. Günstig ist es, wenn die Werkzeugteile weitere Kupplungselemente zur Abstützung und Positionierung, insbesondere Anschläge und eine Drehsicherung, aufweisen.

Ferner sind in einer Ausführungsform die Riegelelemente zumindest bereichsweise zylindrisch ausgebildet. Günstig ist auch eine Anordnung der Riegelstange in Riegelstellung zwischen den Kupplungselementen. Die Riegelnut kann dabei am Umfang eines Kupplungselements, insbesondere eines zapfenförmigen Kupplungselements, angeordnet sein. In einer Ausführungsform ist die Riegelnut tangential am Umfang eines gerundeten, insbesondere zapfenförmigen Kupplungselements ausgerichtet.

Eine Variante sieht eine Parallelausrichtung der Riegelelemente vor. Ferner ist es günstig, die parallelen Riegelelemente quer zu einer Kupplungsachse der Kupplungseinrichtung auszurichten. In einem Ausführungsbeispiel ist die Riegelstange mit einem Federelement verbunden. Von Vorteil ist außerdem eine Anordnung der Riegelelemente zwischen zwei distanzierten Kontaktstellen der Kupplungselemente.

Die Riegelstange ist in einer Stangenführung beweglich geführt. Diese ist bevorzugt als Schiebeführung, insbesondere als Führungsschlitz, mit einer Neigung entgegen der Kupplungsrichtung ausgebildet. Die Stangenführung kann alternativ eine andere Ausbildung, z.B. als Schwenkführung, und/oder eine andere Ausrichtung, z.B. quer zur Kupplungsachse, haben.

In einem Ausführungsbeispiel weist das Basisteil des Werkzeugs einen ortsfesten oder beweglichen Adapter für ein wechselbares Werkzeugteil auf. Ein solcher Adapter kann eine in ihrer Axialrichtung gehaltene und geführte Riegelstange aufweisen, die ggf. einseitig oder beidseitig über den Adapter übersteht. Ein Adapter kann einen Korpus mit einer Stangenführung, insbesondere einer Schiebeführung, für die Riegelstange und mit einer Aufnahme für das Federelement aufweisen. Die Riegelstange kann einseitig oder beidseitig über den Korpus überstehen. In einer Variante kann ein wechselbares Werkzeugteil auch ein Führungselement, insbesondere einen konturierten Bund, aufweist.

Das Werkzeug, insbesondere sein Basisteil, kann ferner einen Anschluss für die Verbindung mit einer Handhabungseinrichtung oder einer Wechselkupplung aufweisen. Das Werkzeug kann Bestandteil eines Werkzeugwechselsystems sein, bei dem ein Halter eine Führung und eine Sicherung für ein wechselbares Werkzeugteil aufweist.

Die Erfindung ist in den Zeichnungen beispielhaft und schematisch dargestellt. Im Einzelnen zeigen:
- Figur 1:: eine perspektivische Ansicht einer Arbeitsvorrichtung mit einem Roboter und einem mehrteiligen Werkzeug,
- Figur 2:: eine teilweise aufgebrochene Seitenansicht des mehrteiligen Werkzeugs an einem Halter einer Bereitstellung für wechselbare Werkzeugteile,
- Figur 3:: eine vergrößerte Darstellung des aufgebrochenen Bereichs von Figur 2 mit Darstellung der Kupplungs- und Verriegelungseinrichtung,
- Figur 4:: eine perspektivische und teilweise explosionsartige Darstellung von wechselbaren Werkzeugteilen mit Komponenten der Kupplungs- und Verriegelungseinrichtung,

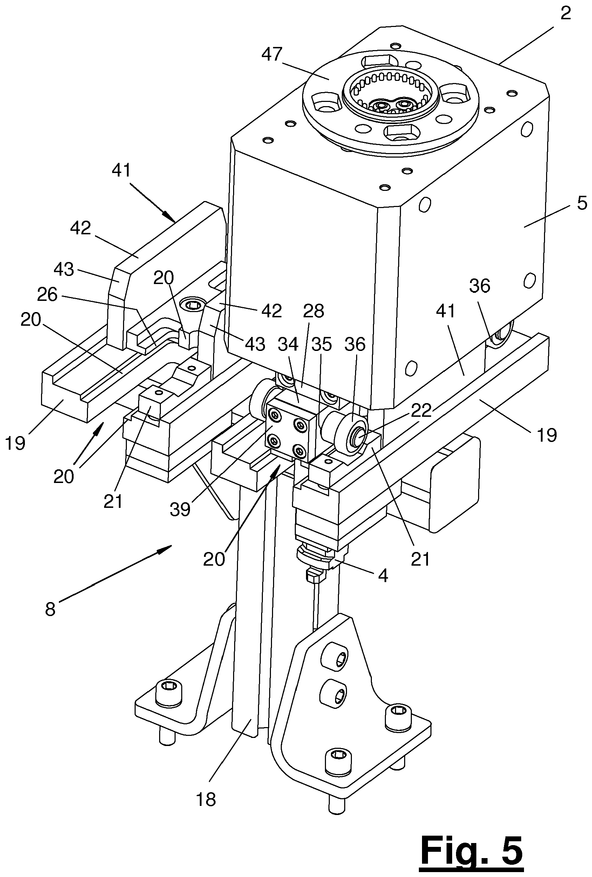

- Figur 5:: eine perspektivische Darstellung eines mehrteiligen Werkzeugs an einer Bereitstellung mit mehreren Haltern,

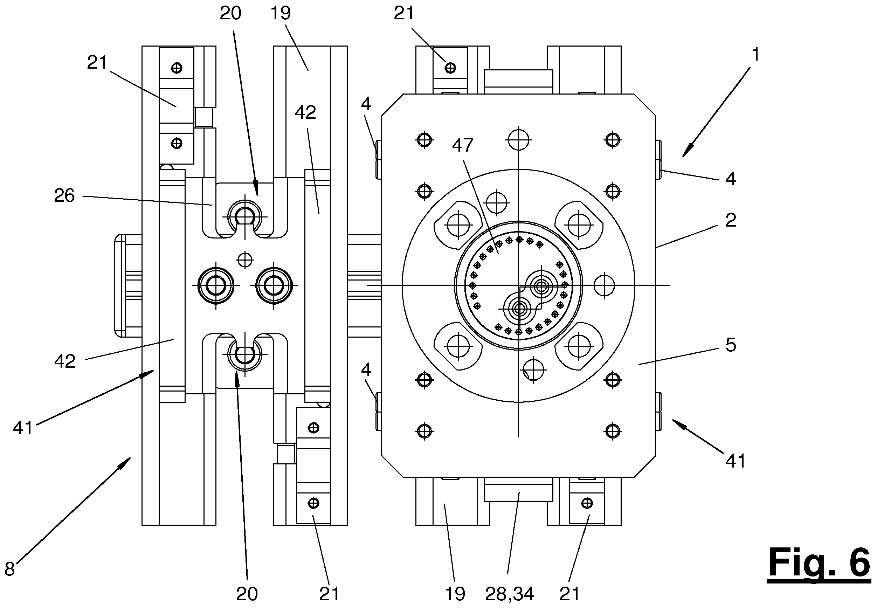

- Figur 6:: eine Draufsicht der Anordnung von Figur 5 und

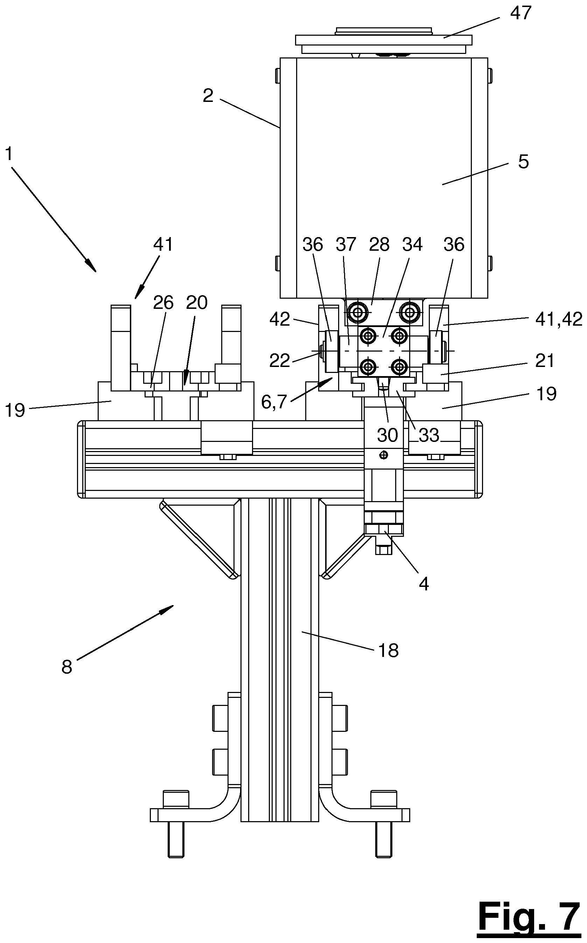

- Figur 7:: eine Frontansicht der Anordnung von Figur 5.

Die Erfindung betrifft ein mehrteiliges Werkzeug (2). Die Erfindung betrifft ferner ein Werkzeugwechselsystem (1) für ein mehrteiliges Werkzeug (2). Die Erfindung bezieht sich auch auf eine Arbeitsvorrichtung (3) mit einem Werkzeugwechselsystem (1) und einem oder mehreren mehrteiligen Werkzeug(en) (2).

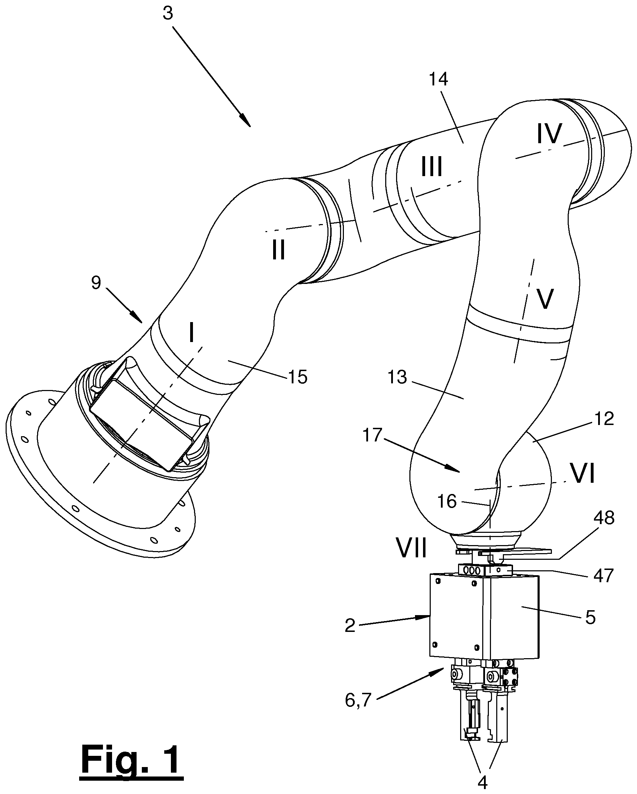

Figur 1 zeigt schematisch eine Arbeitsvorrichtung (3) mit einer mehrachsig beweglichen Handhabungseinrichtung (9) und einem mehrteiligen Werkzeug (2), welches im gezeigten Ausführungsbeispiel als Greifwerkzeug ausgebildet ist. Das Werkzeug (2) kann Bestandteil eines in den anderen Figuren gezeigten Werkzeugwechselsystems (1) sein.

Die Handhabungseinrichtung (9) ist vorzugsweise als mehrachsiger Roboter mit z.B. sieben angetriebenen Roboterachsen I - VII ausgebildet. Sie ist insbesondere als taktiler Roboter ausgebildet, der auf einwirkende Belastungen reagiert und hierfür eine Sensorik (17) zu deren Erfassung und Auswertung aufweist. Der Roboter (9) hat mehrere miteinander beweglich verbundene und angetriebene Glieder (12,13,14,15). Er besitzt an seinem Endglied (12), welches z.B. als Roboterhand ausgebildet ist, ein z.B. flanschförmiges, drehend um die Achse (16) bzw. VII angetriebenes Abtriebselement, an dem das Werkzeug (2) über einen werkzeugseitigen Anschluss (47) direkt oder unter Zwischenschaltung einer Wechselkupplung (48) befestigt ist. Weitere Einzelheiten der Arbeitsvorrichtung (3) werden nachfolgend erläutert.

Das mehrteilige Werkzeug (2) kann in unterschiedlicher Weise ausgebildet sein und kann unterschiedliche Werkzeugfunktionen erfüllen. In den gezeigten Ausführungsbeispielen ist das Werkzeug (2) als Greifwerkzeug, z.B. als Parallelgreifer, ausgebildet. In anderen, nicht dargestellten Varianten kann das Werkzeug (2) als Bearbeitungswerkzeug zum Fügen, zum Auftragen von Materialien, zum Drücken oder Ziehen, zu Formgebungsverfahren oder zu anderen Zwecken ausgebildet sein.

Das mehrteilige Werkzeug (2) besteht aus einem Werkzeugteil (5), z.B. einem Basisteil oder einem Grundkörper, und aus einem wechselbaren Werkzeugteil (4).

Die Werkzeugteile (4,5) können jeweils einzeln oder mehrfach vorhanden sein. Im gezeigten Ausführungsbeispiel sind am Werkzeugteil bzw. Basisteil (5) zwei oder mehr wechselbare Werkzeugteile (4) angeordnet. Letztere können eine zusammengehörige Gruppe bzw. einen sog. Satz von wechselbaren Werkzeugteilen (4) bilden. Das mehrteilige Werkzeug (2) kann mehrere solcher Sätze oder Gruppen von Werkzeugteilen (4) aufweisen, die jeweils an unterschiedlichen Einsatzzwecke und Werkstücke angepasst sind.

Bei der Ausbildung als Greifwerkzeug, insbesondere als Parallelgreifer, sind die wechselbaren Werkzeugteile (4) Greiffinger, die jeweils eine dem Einsatzzweck entsprechende geometrische Ausgestaltung und insbesondere Formanpassung an den zu greifenden Körper haben. Der gezeigte Parallelgreifer hat z.B. mindestens eine Gruppe von zwei oder mehr parallelen wechselbaren Greiffingern (4).

Die verschiedenen Arten oder Gruppen von wechselbaren Werkzeugteilen (4) können an einer Bereitstellung (8) angeordnet sein, die z.B. als Magazin ausgebildet ist. Die Bereitstellung (8) kann einen oder mehrere Halter (19) für einzelne oder für Gruppen von wechselbaren Werkzeugteilen (4) aufweisen.

Das eine oder erste Werkzeugteil oder Basisteil (5) ist zur Verbindung mit dem Roboter (9) oder einer anderen Handhabungseinrichtung vorgesehen und trägt den besagten Anschluss (47). Ein oder mehrere wechselbare Werkzeugteile (4) können mittels einer Kupplungseinrichtung (6) und einer Verriegelung (7) mit dem Werkzeug- oder Basisteil (5) verbunden und wieder gelöst sowie abgegeben werden.

Das erste Werkzeugteil oder Basisteil (5) kann in unterschiedlicher Weise ausgebildet sein. Im gezeigten Ausführungsbeispiel besteht es aus einem Grundgehäuse, an dem z.B. ein oder mehrere Adapter (28,29) starr oder beweglich angeordnet sein können. Der oder die Adapter (28,29) können vom Basisteil (5) an einer Seite sowie parallel abstehen und dienen zum Ankuppeln des oder der wechselbaren Werkzeugteile (4). In der gezeigten Ausführungsform ist ein Antrieb (27) vorgesehen, der die Adapter (28,29) relativ zueinander bewegt, insbesondere verschiebt. Durch den Antrieb (27) können die Adapter (28,29) und die ggf. angekuppelten wechselbaren Werkzeugteile (4) aneinander angenähert und voneinander entfernt werden.

Das mehrteilige Werkzeug (2) weist eine Kupplungseinrichtung (6) mit Kupplungselementen (30,31,32) und eine Verriegelung (7) mit formschlüssigen Riegelelementen (22,23) zum Sichern der Kuppelstellung der Werkzeugteile (4,5) auf. Die besagten Einrichtungen (6,7) können je nach Zahl der anzukuppelnden Werkzeugteile (4) einfach oder mehrfach vorhanden sein. Sie können dabei untereinander gleichartig ausgebildet sein. Der Antrieb (27) und/oder die Handhabungseinrichtung (9) können zum An- und Abkuppeln und zur Betätigung der Verriegelung (7) benutzt werden.

In den gezeigten Ausführungsbeispielen weist die jeweilige Kupplungseinrichtung (6) mehrere formschlüssig ineinander greifende und die Kupplungsposition definierende Kupplungselemente (30,31,32) an den Werkzeugteilen (4,5) auf. Die Kupplungselemente (30,31,32) sind in Kupplungsrichtung (44) zusammensteckbar.

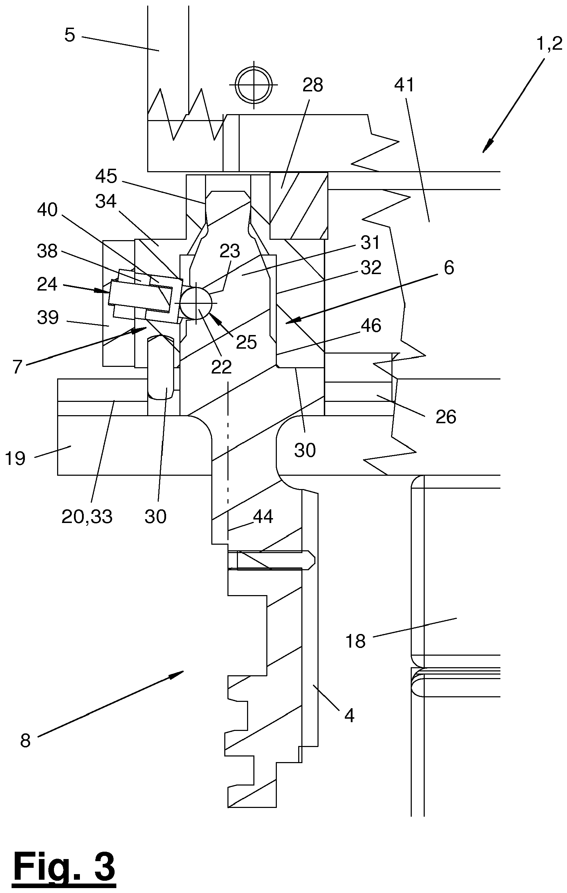

Die Kupplungselemente (31,32) sind z.B. als Kupplungszapfen (31) am wechselbaren Werkzeugteil (4) und als Kupplungsöffnung (32) am Basisteil (5) oder am Adapter (28,29) ausgebildet. Die Zuordnung kann auch umgekehrt sein. Der Kupplungszapfen (31) und die Kupplungsöffnung (32) weisen gegenseitig angepasste Konturen mit mehreren, z.B. zwei axial distanzierten und definierten Kontaktstellen (45,46) auf (vgl. Figur 3), wobei nur an diesen ein Führungskontakt besteht. Die Kupplungselemente (31,32) können in Längsrichtung eine konische und abgestufte Formgebung besitzen, wobei sie an den Kontaktstellen (45,46) unterschiedliche Durchmesser haben. Die Querschnittsform der Kupplungselemente (31,32) ist vorzugsweise rund, insbesondere kreisrund, wobei alternativ prismatische oder andersartige Querschnitte möglich sind.

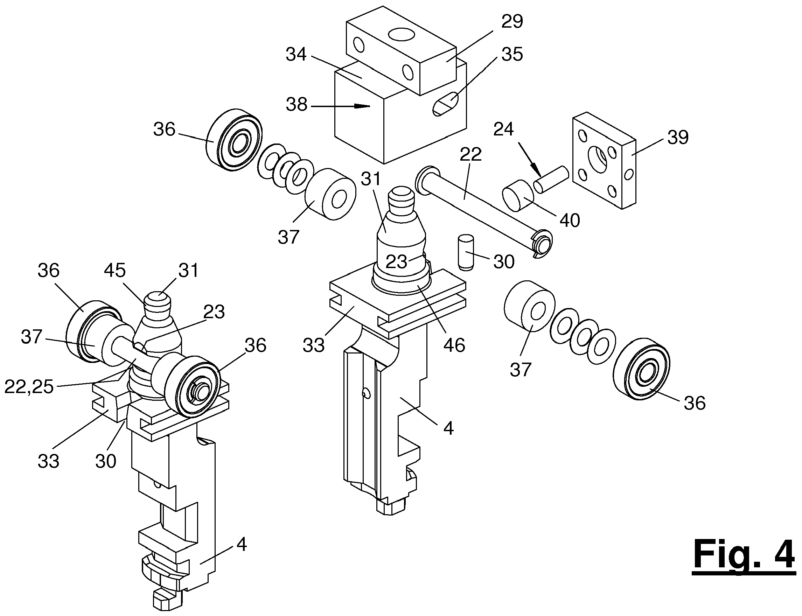

Die ein oder mehreren anderen Kupplungselemente (30) können zur gegenseitigen Abstützung und Positionierung der Werkzeugteile (4,5) vorgesehen und ausgebildet sein. Sie können z.B. gemäß Figur 3 als Anschläge und/oder als Drehsicherung um die Kupplungsachse (44) vorgesehen und ausgebildet sein. Die gezeigte Drehsicherung (30) besteht z.B. aus einem abstehenden Zapfen an einem Adapter (28,29), der in einen Schlitz an einem plattenartigen und verbreiterten Bund (33) am wechselbaren Werkzeugteil (4) greift. Figur 4 zeigt ebenfalls diese Ausbildung.

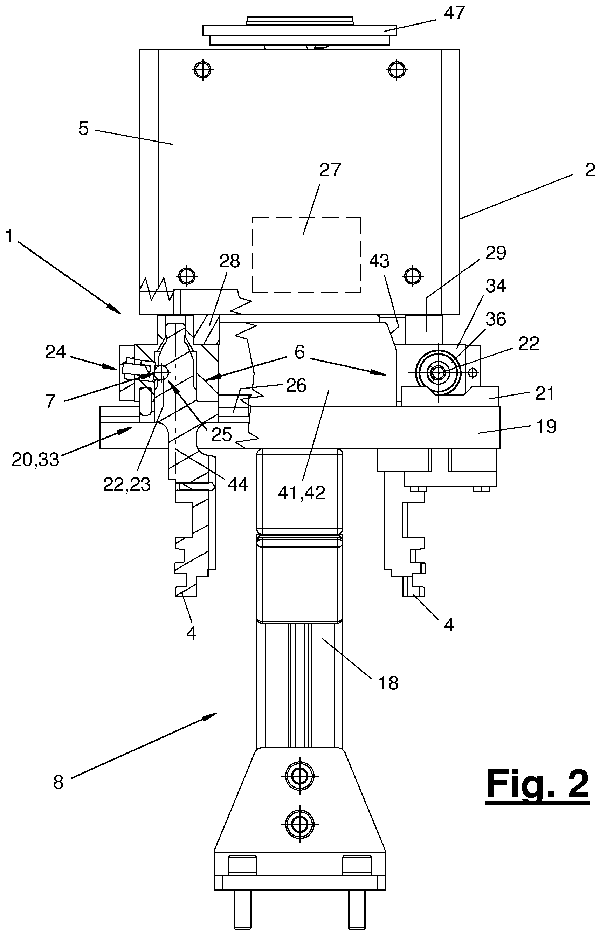

Die Verriegelung (7) ist der Kupplungseinrichtung (6) zugeordnet. Wie insbesondere Figur 2 bis 4 verdeutlichen, sind die jeweils zusammenwirkenden Riegelelemente (22,23) als Riegelstange (22) und als Riegelnut (23) ausgebildet. Sie greifen in Kupplungs- und Riegelstellung formschlüssig ineinander und besitzen zumindest in diesem beiderseitigen Eingriffsbereich (25) (vgl. Figur 4) eine aneinander angepasste runde, vorzugsweise kreisrunde, Querschnittsform. Figur 2 und 3 zeigen im Schnitt diese Eingriffstellung mit einer halbkreisförmigen Riegelnut (23) und einem kreisrunden Stangenquerschnitt.

Die Riegelelemente (22,23) haben eine längliche, vorzugsweise gerade Form und sind parallel zueinander ausgerichtet. Sie sind ferner zumindest bereichsweise, insbesondere im Eingriffsbereich (25), zylindrisch ausgebildet. Die Riegelelemente (22,23) sind außerdem quer zur Kupplungsachse (44) ausgerichtet.

Die Riegelstange (22) ist quer zu ihrer Längsachse beweglich, insbesondere verschieblich gelagert und geführt. Sie wird ferner von einem Federelement (24) beaufschlagt und nach vorn in Riegelstellung gedrückt. Die Bewegungsrichtung und Führung erfolgt dabei mit einer Neigung, die schräg und vorzugsweise entgegen der Kupplungsrichtung (44) beim Einstecken und Ankuppeln gerichtet ist. Zum An- und Abkuppeln sowie am Halter (19) nehmen die wechselbaren Werkzeugteile (4) bevorzugt eine vertikale Lage ein. Hierdurch taucht die Riegelstange (22) beim Verriegeln schräg von oben in die entsprechend ausgerichtete Riegelnut (23).

In den gezeigten Ausführungsbeispielen ist die Riegelstange (22) dem Basisteil (5) und insbesondere einem Adapter (28,29) zugeordnet. Die Riegelnut (23) ist einem wechselbaren Werkzeugteil (4) zugeordnet. Die gegenseitige Zuordnung dieser Riegelelemente (22,23) und die zugehörige Kinematik können alternativ vertauscht sein.

Ferner ist bei dieser beispielhaften Ausgestaltung die Riegelstange (22) der Kupplungsöffnung (32) und die Riegelnut (23) dem Kupplungszapfen (31) zugeordnet. Alternativ kann diese Zuordnung ebenfalls geändert, insbesondere vertauscht sein. Außerdem kann sie sich bei einer anderen Ausgestaltung der Kupplungselemente (31,32) entsprechend ändern.

Wie Figur 2 und 3 verdeutlichen, befindet sich der Eingriffsbereich (25) der Riegelelemente (22,23) in Kupplungsstellung im Inneren der Kupplungseinrichtung (6) und zwischen den einander gegenüberliegenden Kupplungselementen (31,32). Die Riegelelemente (22,23) befinden sich dabei vorzugsweise zwischen der oberen und der unteren Kontaktstelle (45,46). In diesem Bereich können die zusammengesteckten Kupplungselemente (31,32) unterschiedliche Durchmesser aufweisen und radial distanziert sein.

Die Riegelnut (23) ist am Umfang des einen Kupplungselements (31), vorzugsweise des Kupplungszapfens, angeordnet. Wenn das Kupplungselement (31) eine gerundete, insbesondere kreisbogenförmige Kontur aufweist, ist die Riegelnut (23) tangential am besagten äußeren Umfang ausgerichtet.

Die Riegelstange (22) wird in der vorerwähnten Weise von einem Federelement (24) beaufschlagt. Sie kann mit dem Federelement (24) lose oder teilweise fest verbunden sein. Wie Figur 3 verdeutlicht, kann das Federelement (24) einen massiven oder hohlen Bolzen (40) aufweisen, der quer zur Riegelstange (22) ausgerichtet und an dieser mit Federkraft lose anliegt oder mit dieser fest verbunden ist. Diese Verbindungsstelle liegt bevorzugt dem Eingriffsbereich (25) gegenüber. Sie kann zentral an der Riegelstange (22) angeordnet sein.

In den gezeigten Ausführungsbeispielen weist der jeweilige Adapter (28,29) einen Korpus (34) auf, der zur Aufnahme und Führung der Riegelstange (22) und ggf. des Federelements (24) ausgebildet ist und der auch die Kupplungsöffnung (32) aufweist. Der Korpus (34) stützt zudem die Riegelstange (22) und die Verriegelung (7) in der Eingriffs- und Riegelstellung ab.

Die Riegelstange (22) ist quer durch den Korpus (34) gesteckt. Der Korpus (34) weist eine Stangenführung (35) auf, die die durchgesteckte Riegelstange (22) aufnimmt und die z.B. in den gezeigten Ausführungsbeispielen als Schiebeführung für die Riegelstange (22) ausgebildet ist. Die Stangenführung (35) bzw. Schiebeführung kann als z.B. gerader Führungsschlitz bzw. als Langloch im Korpus (34) ausgebildet sein. Sie kann ferner eine schräge Lage und Ausrichtung zur Kupplungsachse (44) haben, die bevorzugt entgegen der Einsteckrichtung bzw. die Kupplungsrichtung beim Ankuppeln gerichtet ist. Die Stangenführung (35) reicht bis in den Bereich der Kupplungsöffnung (32). Ihre Schräglage bestimmt die Bewegungsrichtung der Riegelstange (22) beim Verriegeln und Entriegeln.

Im Korpus (34) kann sich ferner eine Aufnahme (38) für das Federelement (24) befinden, die z.B. als zylindrische Bohrung ausgebildet und ebenfalls schräg, insbesondere parallel zu der schrägen Schiebeführung (35) ausgerichtet ist. In der Aufnahme (38) befinden sich z.B. der Federbolzen (40) und die hier rückseitig angreifende Druckfeder. Die bevorzugt zentral angeordnete Aufnahme (38) führt auch das Federelement (24), insbesondere den Federbolzen (40). Außenseitig ist die Aufnahme (38) durch einen am Korpus (34) befestigbaren Deckel (39) verschlossen.

Die Riegelstange (22) erstreckt sich quer durch den Korpus (34) und steht einseitig oder beidseitig über dessen Seitenwände vor. An ein oder beiden Stangenenden ist ein Anschlagelement (36) angeordnet, welches zur Betätigung der Verriegelung (7) mit einem nachfolgend erläuterten Anschlag (41) am Halter (19) zusammenwirkt. Das Anschlagelement (36) kann hierfür in geeigneter Weise ausgebildet sein, vorzugsweise als Gleit- oder Rollelement. Im gezeigten Ausführungsbeispiel sind frei drehbare Rollen vorgesehen. Die Riegelstange (22) ist zentrisch am Korpus (34) angeordnet und dabei in ihrer Axialrichtung geführt. Dies kann z.B. durch aufgezogene Distanzelemente (37) zwischen Anschlagelement (36) und Korpuswand geschehen.

Die Bereitstellung (8) kann mehrere Halter (19) aufweisen, die z.B. paarweise oder in größeren Gruppen an ein oder mehreren Ständern (18) angeordnet sind. Die Halter (19) können eine horizontale Ausrichtung haben. An jedem Halter (19) kann ein einzelnes wechselbares Werkzeugteil (4) oder eine Gruppe solcher Werkzeugteile (4) in definierter Lage aufgenommen und nach dem Abkuppeln gehalten werden. In den gezeigten Ausführungsbeispielen nimmt jeder Halter (19) zwei wechselbare Werkzeugteile (4), insbesondere Greiffinger, auf. Die Halterzahl kann der Zahl von einzelnen Werkzeugteilen (4) oder Gruppen von Werkzeugteilen (4) entsprechen oder auch größer sein.

Für die exakte Positionierung der wechselbaren Werkzeugteile (4) weist jeder Träger eine oder mehrere Führungen (20) auf, die formschlüssig mit dem vorerwähnten Führungselement (33) am jeweiligen wechselbaren Werkzeugteil (4) zusammenwirken können. Die Führung (20) kann mehrteilig sein. Sie weist z.B. einen geraden Schlitz mit sockelartig abgestuften Schlitzwänden an der Oberseite auf. Über diesen Sockeln sind am hinteren Schlitzbereich quer vorstehende parallele und längs des Schlitzes ausgerichtete und zur Schlitzmitte vorspringende Führungsleisten (26) vorgesehen, die sich nur über einen Teil der Schlitzlänge erstrecken und die seitlich in Nuten an dem plattenförmigen oder bundförmigen sowie konturierten Führungselement (33) eingreifen. Am Schlitzende kann die Führung (20) ferner einen axial vorstehenden Führungs- oder Anschlagstift aufweisen, der mit einer entsprechenden Ausnehmung am Frontende des Führungselements (33) zusammenwirkt.

Ferner kann der Führung (20) eine Sicherung (21) zugeordnet sein, die ein unerwünschtes Entfernen des aufgenommenen Werkzeugteils (4) verhindert. Die Sicherung (21) kann vom Werkzeugteil (5) beim An- und Abkuppeln automatisch betätigt werden. Sie ist z.B. als federbelastete Anschlagleiste am offenen Schlitzende ausgeführt, die an eine der besagten seitlichen Führungsleisten (26) sperrend anschließt. Die Sicherung (21) kann bei der Zuführung des Werkzeugs (2) von einem Anschlagelement (36) oder einer anderen Werkzeugkomponente niedergedrückt werden und gibt dadurch den Eingriff der Führungselemente (20,33) frei.

Zum Abkuppeln wird ein mehrteiliges Werkzeug (2) mit auseinandergefahrenen Adaptern (28,29) und angekuppelten Werkzeugteilen (4) von oben an einen Halter (19) zugestellt, wobei die in der Breite angepassten Werkzeugteile (4) in die Schlitze der Führung (20) eintauchen oder außenseitig gegenüber den Schlitzenden positioniert werden können. Bei einem Eintauchen werden die Führungselemente (33) zur Anlage an den Schlitzwandsockeln beidseits des jeweiligen Führungsschlitzes gebracht. Anschließend wird der Antrieb (27) betätigt und nähert die Adapter (28,29) mit den Werkzeugteilen (4) aneinander an. Hierdurch treten einerseits die zur Bewegungsrichtung parallelen Führungselemente (20,33) in einen nach oben und unten wirksamen formschlüssigen Eingriff, wobei der Bewegungsweg durch die stirnseitigen Führungsstifte begrenzt werden kann. Die zuvor niedergedrückte Sicherung (21) gestattet den Führungseingriff. Die Sicherung (21) kann an der Oberseite eine Wannenform aufweisen, an der das Anschlagelement (36) entlanggleitet und am inneren Wannenende ggf. etwas angehoben wird.

An dem Halter (19) sind ein oder mehrere der vorerwähnten Anschläge (41) angeordnet. Diese sind kulissenartig ausgebildet und bestehen z.B. aus zwei parallelen und beidseits vom Schlitz der Führung (20) angeordneten, hochstehenden Wänden (42), deren Stirnseite etwa auf gleicher Höhe mit den Enden der seitlich vorspringenden Führungsleisten (26) angeordnet ist. Die Wände (42) können eine im wesentlichen rechteckige oder trapezartige Form aufweisen und am oberen Eckbereich eine Anschrägung (43) aufweisen. Gegenüberliegende Halter (19) können einen gemeinsamen, beidseitigen Anschlag (41) haben.

Bei der Einfahrbewegung der Adapter (28,29) schlagen die Anschlagelemente (36) an den Stirnseiten der Wände (42) an. Durch die fortgesetzte Zustell- und Einfahrbewegung wird der jeweilige Korpus (34) gegenüber der in Anschlagstellung gehaltenen Riegelstange (22) weiterbewegt, wodurch das jeweilige Federelement (24) gespannt wird und die Riegelstange (22) mittels der Stangenführung (35) aus der Eingriffstellung (25) gelöst und zurückbewegt wird. Entsprechend deren Schräglage kann sich das Anschlagelement (36) dabei entlang der Stirnseite der zugehörigen Wand (42) nach oben bewegen. Am Ende der Zustell- und Einfahrbewegung ist die Verriegelung (7) gelöst und die Kupplungseinrichtung (6) freigegeben, wobei das jeweilige wechselbare Werkzeugteil (4) am Halter (19) formschlüssig geführt und gehalten ist. Das Werkzeugteil oder Basisteil (5) kann dann von den ein oder mehreren wechselbaren Werkzeugteilen (4) entlang der Kupplungsrichtung (44) abgezogen, insbesondere abgehoben, und abgekuppelt werden. Sobald die Anschlagelemente (36) außer Eingriff mit dem Anschlag (41) gelangen, bewegt das sich entspannende Federelement (24) die jeweilige Riegelstange (22) wieder in die Ausgangsstellung zurück. Die abgekuppelten Werkzeugteile (4) werden von der Sicherung (21) und der Führung (20) in definierter Position und Ausrichtung am Halter (19) fixiert.

Zum Ankuppeln wird das Werkzeugteil oder Basisteil (5) mit entsprechend positionierten Adaptern (28,29) in Kupplungsrichtung (44) an die ein oder mehreren bereitstehenden Werkzeugteile (4) heranbewegt, wobei die Kupplungselemente (31,32) in Eingriff kommen. Die jeweilige Riegelstange (22) wird durch die Konusform der Kupplungselemente (31,32) und/oder die Anschrägungen (43) am Anschlag (41) gegen die Federkraft verdrängt, bis sie in Anschlagstellung der Kupplungsteile (30,31,32) in die Riegelnut (23) einschnappt und die Verriegelung (7) geschlossen wird. Beim Ankuppeln kann auch die Sicherung (21) wieder niedergedrückt werden, sodass anschließend bei einem Auseinanderbewegen der Adapter (28,29) die angekuppelten Werkzeugteile (4) außer Eingriff mit der Führung (20) gebracht werden. Die Handhabungseinrichtung (9) kann dann das Werkzeug (2) vom Halter (19) entfernen.

Der Antrieb (27) des Werkzeugs (2) kann mit einer Sensorik ausgestattet sein, die Wege und/oder Belastungen aufnimmt und dadurch eine Überwachung des An- und Abkuppelns und des korrekten Funktionsablaufs gestattet. Hierbei kann insbesondere die Führung (20) einen detektierbaren mechanischen Widerstand bei der Zustellbewegung bzw. bei den Relativ- und Fahrbewegungen des oder der Adapter (28,29) bieten. Auch die vorzugsweise an der Oberseite konturierte Sicherung (21) kann als Widerstand detektiert werden. Nur wenn derartige mechanische Widerstände an der vorgesehenen Stelle des Zustellwegs und in vorgesehener Größe festgestellt werden, liegt eine korrekte Funktion vor. Die Wannenform der Sicherung (21) kann auch bei der Ausfahrbewegung detektierbar und wirksam sein. Über derartige Widerstände kann auch die korrekte Funktion der Verriegelung (7) und insbesondere die funktionsgerechte Stellung der Riegelstange (22) und des oder der Anschlagelemente (36) erfasst werden.

Zum An- und Abkuppeln kann außerdem die vorerwähnte Sensorik (17) eines taktilen Roboters (9) von Nutzen sein. Mit ihr können ebenfalls Belastungen detektiert und ggf. in Relation zu der jeweiligen Roboterposition gesetzt werden. Hierüber kann sowohl das Annähern der angekuppelten Werkzeugteile (4) und deren Anschlag an der Führung (20) des Trägers (19), als auch ein korrekter Kupplungseingriff der Kupplungselemente (31,32) beim Ankuppeln detektiert werden. Ein taktiler Roboter (9) ist ansonsten auch für die anderen Werkzeugfunktionen und die damit ausgeführten Prozesse zu Überwachungszwecken von Vorteil.

Figur 1 zeigt eine bevorzugte Ausführungsform eines taktilen Roboters (9). Dieser weist mehrere, z.B. sieben kraftgesteuerte oder kraftgeregelte Roboterachsen (I -VII) nebst einer zugeordneten und einwirkende Belastungen erfassenden Sensorik (17) auf. Der Roboter (9) kann außerdem mindestens eine nachgiebige Roboterachse (I -VII) mit einer Nachgiebigkeitsregelung, insbesondere einer reinen Kraftregelung oder einer Kombination aus einer Positions- und Kraftregelung aufweisen. Der Roboter (9) hat hierzu eine entsprechend ausgestaltete Robotersteuerung (nicht dargestellt).

Der gezeigte Roboter ist als Gelenkarmroboter mit rotatorischen Achsen (I -VII) ausgebildet. Diese weisen jeweils ein Drehlager und einen hier zugeordneten steuerbaren oder regelbaren Antrieb nebst einer Sensorik (17) auf. Die Roboterachsen (I) bis (VII) können außerdem eine steuer- oder schaltbaren Bremse aufweisen.

Der Roboter (9) weist mehrere über die besagten Roboterachsen (I -VII) gelenkig miteinander verbundene Glieder (12,13,14,15) auf. Dies sind z.B. ein Basisglied (15), zwei Zwischenglieder (13,14) und ein Endglied (12) mit der abtreibenden Drehachse (16), die zugleich die letzte Roboterachse (VII) bildet. Einzelne Glieder (13,14) können mehrteilig und in sich beweglich, insbesondere um eine Längsachse bzw. Roboterachse (III,V) verdrehbar sein. Die Roboterachsen (I -VII) und ihre Achsantriebe, insbesondere Drehantriebe, sowie die Sensorik (17) sind mit der Robotersteuerung verbunden. Die Roboterglieder (12,13,14,15) können hohl sein und innen durchgeführte Leitungen für Betriebsmittel, z.B. Leistungs- und Signalströme, Fluide etc. aufnehmen, die am Endglied (12) nach außen treten und am Werkzeugteil (5) oder an einer ggf. zwischengeschalteten Wechselkupplung (48) angeschlossen werden.

Die vorgenannte Kraftsteuerung oder Kraftregelung der Roboterachsen (I -VII) bezieht sich auf die Wirkung nach außen am Abtriebselement des Endglieds (12) sowie auf die dort einwirkenden Reaktionskräfte und -momente. Roboterintern findet an den drehenden Achsen oder Achsantrieben eine Momentensteuerung oder Momentenregelung statt. Die Sensorik (17) weist hierfür geeignete Sensoren z.B. an den besagten Achsen (I -VII) auf, die neben den einwirkenden Belastungen ggf. auch Drehbewegungen und Drehpositionen detektieren können.

Mittels der Sensorik (17) kann von der Robotersteuerung die vorgenannte Nachgiebigkeitsregelung realisiert werden. Hierdurch kann einerseits der taktile Roboter (9) das Werkzeug (2) federnd und ausweichfähig halten und führen, wobei z.B. Crashs und insbesondere Unfälle mit Personen vermieden werden können. Die Eigenschaft kann auch zum manuellen Teachen und Programmieren benutzt werden, mit dem Vorteil einer schnellen und einfachen Programmierung, Inbetriebnahme sowie Anpassbarkeit an unterschiedliche Werkzeuge und damit auszuführende Prozesse und Jobs. Über eine Belastungserfassung der Sensorik (17) kann außerdem das Suchen und Finden von Arbeitspositionen und auch von der Kuppelstellung unterstützt und erleichtert werden.

Ferner können Winkelfehler in der Relativstellung der Glieder (12,13,14,15) detektiert und bedarfsweise korrigiert werden.

Die Sensorik (17) kann ferner zur Überprüfung der Formhaltigkeit und Funktionsfähigkeit der Werkzeuge (2) benutzt werden. Der Roboter (9) kann z.B. das Werkzeug (2) mit den zu überprüfenden Elementen, insbesondere den wechselbaren Werkzeugteilen (4), an einem Referenzpunkt mit bekannter Position in einen leichten Berührungskontakt bringen, wobei die Roboterbewegung und -position überwacht und ein Berührungskontakt mittels der Sensorik (17) detektiert wird. Die Nachgiebigkeitsregelung verhindert dabei schadensträchtige Kollisionen und schaltet die Roboterbewegung bei Überschreiten einer vorgegebenen Belastungsschwelle ab. Durch Vergleich der Soll- und IstPosition des Roboters (9) bei einem detektierten Berührungskontakt kann festgestellt werden, ob ein Werkzeug (2) intakt oder beschädigt ist und ob insbesondere der programmierte Tool-Center-Point (TCP) des Werkzeugs (2) sich noch an der vorgesehenen Position befindet.

Der Roboter (9) kann ferner als Leichtbauroboter ausgebildet sein und aus leichtgewichtigen Materialien, z.B. Leichtmetallen und Kunststoff bestehen. Er hat auch eine kleine Baugröße und ein niedriges Gewicht. Ein solcher Leichtbauroboter mit einem handhabbaren Gewicht von z.B. ca. 30 kg, kann mobil sein und kann sich manuell von einem Einsatzort zu einem anderen transportieren lassen. Für einen solchen taktilen Roboter und insbesondere Leichtbauroboter ist die vorbeschriebene Ausbildung des mehrteiligen Werkzeugs (2) und des Werkzeugwechselsystems (1) mit dem geringen Werkzeuggewicht besonders vorteilhaft.

Abwandlungen der gezeigten und beschriebenen Ausführungsformen sind in verschiedener Weise möglich. Die Zahl der Adapter (28,29) kann variieren. Ein oder mehrere Adapter (28,29) können relativ ortsfest am Werkzeugteil (5) angeordnet sein. Die Adapter (28,29) können alternativ auch entfallen, wobei die ein oder mehreren wechselbaren Werkzeugteile (4) direkt am anderen Werkzeug- oder Basisteil (5) mit entsprechend ausgebildeter Kupplungseinrichtung (6) und Verriegelung (7) angekuppelt werden. Der vorbeschriebene Korpus (34) nebst Komponenten kann im Werkzeug- oder Basisteil (5) angeordnet sein.

Bei Entfall oder stationärer Anordnung des oder der Adapter (28,29) kann die vorstehend beschriebene Zustellbewegung entlang der Führung (20) alternativ durch eine entsprechende Bewegung der Handhabungseinrichtung (9) ausgeführt werden. Hierbei ist deren Ausbildung als taktiler Roboter (9) von besonderem Vorteil.

Ferner kann an einem Werkzeug- oder Basisteil (5) nur ein einzelnes wechselbares Werkzeugteil (4) an- und abgekuppelt werden. Der Halter (19) hat hierfür eine entsprechende Ausbildung. Das Werkzeugteil (4) kann alternativ in anderer Weise ausgebildet sein und eine andere Funktion haben. Es kann z.B. säulenartig gestaltet sein und einen Druck- oder Prägestempel oder dgl. bilden. Ein wechselbares Werkzeugteil (4) kann außerdem mehrere Kupplungselemente (31) oder (32) und mehrere Kupplungsstellen aufweisen. Dies kann z.B. bei größeren Werkzeugteilen (4) der Fall sein. Ein wechselbares Werkzeugteil (4) kann außerdem eigene Beweglichkeiten und ggf. angetriebene und steuerbare Zusatzachsen aufweisen. Es kann z.B. eine oder mehrere Rollen, z.B. Falzrollen, Auftragdüsen, Klemm- oder Spannelemente oder dgl. aufweisen. In den gezeigten Ausführungsformen wird der Parallelgreifer mit seinen Greiffingern (4) durch den Antrieb (27) gespannt und geöffnet. Dies kann alternativ auch auf andere Weise erfolgen.

### BEZUGSZEICHENLISTE

- 1: Werkzeugwechselsystem, Werkzeugwechseleinrichtung
- 2: Werkzeug, Greifwerkzeug
- 3: Arbeitsvorrichtung
- 4: Werkzeugteil wechselbar, Finger
- 5: Werkzeugteil, Basisteil
- 6: Kupplungseinrichtung
- 7: Verriegelung, Schließmechanismus
- 8: Bereitstellung, Magazin
- 9: Handhabungseinrichtung, Roboter, taktiler Roboter
- 10: Abtriebselement, Abtriebsflansch, Drehflansch
- 11: Steuerung, Robotersteuerung
- 12: Glied, Endglied, Hand
- 13: Glied, Zwischenglied
- 14: Glied, Zwischenglied
- 15: Glied, Basisglied
- 16: Drehachse
- 17: Sensorik
- 18: Ständer
- 19: Halter für Werkzeugteil
- 20: Führung für Werkzeugteil
- 21: Sicherung
- 22: Riegelelement, Riegelstange
- 23: Riegelelement, Riegelnut
- 24: Federelement
- 25: Eingriffsbereich
- 26: Führungsleiste
- 27: Antrieb
- 28: Adapter
- 29: Adapter
- 30: Kupplungselement, Anschlag, Drehsicherung
- 31: Kupplungselement, Kupplungszapfen, Rastzapfen
- 32: Kupplungselement, Kupplungsöffnung
- 33: Führungselement, Bund
- 34: Korpus von Adapter
- 35: Stangenführung, Schiebeführung, Führungsschlitz
- 36: Anschlagelement, Gleitelement, Rollelement
- 37: Distanzelement
- 38: Aufnahme für Federelement
- 39: Deckel
- 40: Federbolzen
- 41: Anschlag, Kulisse
- 42: Wand
- 43: Anschrägung
- 44: Kupplungsachse, Kupplungsrichtung
- 45: Kontaktstelle
- 46: Kontaktstelle
- 47: Anschluss
- 48: Wechselkupplung

- I - VII: Achse von Roboter

## Patentansprüche

1. Mehrteiliges Werkzeug (2), insbesondere Greifwerkzeug, mit einem Werkzeugteil (5), insbesondere einem Basisteil, und einem wechselbaren Werkzeugteil (4), insbesondere einem Greiffinger, wobei das Werkzeug (2) eine Kupplungseinrichtung (6) mit Kupplungselementen (30,31,32) und eine Verriegelung (7) mit formschlüssigen Riegelelementen (22,23) für die gekuppelten Werkzeugteile (4,5) aufweist, wobei die Riegelelemente (22,23) zumindest im beiderseitigen Eingriffsbereich (25) eine aneinander angepasste runde, insbesondere kreisrunde Querschnittsform aufweisen und wobei ein erstes Riegelelement (23) als Riegelnut und ein zweites Riegelelement (22) als quer zu ihrer Längsachse bewegliche, insbesondere verschiebliche Riegelstange ausgebildet ist.

2. Werkzeug nach Anspruch 1, **dadurch**
**gekennzeichnet, dass** die Kupplungseinrichtung (6) mehrere formschlüssige und die Kupplungsposition definierende Kupplungselemente (30,31,32) an den Werkzeugteilen (4,5) aufweist.

3. Werkzeug nach Anspruch 1 oder 2, **dadurch**
**gekennzeichnet, dass** die Kupplungselemente (31,32) als Kupplungszapfen (31) und als Kupplungsöffnung (32) ausgebildet sind, die gegenseitig angepasste Konturen mit mehreren, insbesondere zwei, axial distanzierten definierten Kontaktstellen (45,46) aufweisen.

4. Werkzeug nach Anspruch 1, 2 oder 3, **dadurch gekennzeichnet, dass** die Riegelstange (22) dem Basisteil (5) und die Riegelnut (23) dem wechselbaren Werkzeugteil (4) zugeordnet ist.

5. Werkzeug nach einem der vorhergehenden Ansprüche, **dadurch gekennzeichnet, dass** die Riegelstange (22) in einer Stangenführung (35), beweglich geführt ist, welche schräg zur Kupplungsachse (44) geneigt und entgegen der Kupplungsrichtung beim Ankuppeln ausgerichtet ist.

6. Werkzeug nach einem der vorhergehenden Ansprüche, **dadurch gekennzeichnet, dass** die Riegelstange (22) in einer Stangenführung (35), beweglich geführt ist, welche als Schiebeführung, bevorzugt mit einem Führungsschlitz, ausgebildet ist.

7. Werkzeug nach einem der vorhergehenden Ansprüche, **dadurch gekennzeichnet, dass** das Basisteil (5) einen ortsfesten oder beweglichen Adapter (28,29) für ein wechselbares Werkzeugteil (4) aufweist.

8. Werkzeug nach einem der vorhergehenden Ansprüche, **dadurch gekennzeichnet, dass** das Basisteil (5) einen Antrieb (27) für einen oder mehrere bewegliche Adapter (28,29) aufweist, wobei der Antrieb (27) eine Sensorik zur Erfassung von Bewegungen und/oder Belastungen des Adapters (28,29) aufweist.

9. Werkzeug nach einem der vorhergehenden Ansprüche, **dadurch gekennzeichnet, dass** der Adapter (28,29) eine Riegelstange (22) aufweist, die am Adapter (28,29) in ihrer Axialrichtung gehalten und geführt ist und die an einem oder beiden überstehenden Enden ein Anschlagelement (36), insbesondere ein Gleit- oder Rollelement, bevorzugt mit einem vorgelagerten Distanzelement (37), aufweist.

10. Werkzeug nach einem der vorhergehenden Ansprüche, **dadurch gekennzeichnet, dass** das Werkzeug (2) ein mit einer Handhabungseinrichtung (9), insbesondere einem Roboter, verbindbares Werkzeugteil (5), insbesondere ein Basisteil (5), und ein oder mehrere, insbesondere zwei oder drei, wechselbare Werkzeugteile (4) aufweist, wobei die Werkzeugteile (4,5) formschlüssig und spielfrei kuppelbar und verriegelbar sind.

11. Werkzeug nach einem der vorhergehenden Ansprüche, **dadurch gekennzeichnet, dass** das Werkzeug (2) als Parallelgreifer mit zwei, drei oder mehr parallelen wechselbaren Greiffingern (4) ausgebildet ist.

12. Werkzeugwechselsystem mit einem mehrteiligen Werkzeug (2) und einer Bereitstellung (8) für ein wechselbares Werkzeugteil (4), wobei für die zu kuppelnden Werkzeugteile (4,5) eine Kupplungseinrichtung (6) mit einer formschlüssigen, federbelasteten Verriegelung (7) vorgesehen ist, **dadurch gekennzeichnet, dass** das Werkzeug (2) nach mindestens einem der Ansprüche 1 bis 11 ausgebildet ist.

13. Werkzeugwechselsystem nach Anspruch 12, **dadurch gekennzeichnet, dass** an der Bereitstellung (8) ein Halter (19) für ein wechselbares Werkzeugteil (4) und ein Anschlag (41) für die Betätigung einer Riegelstange (22) angeordnet ist, wobei die Bereitstellung (8) bevorzugt als Magazin mit mehreren Haltern (19) für verschiedene wechselbare Werkzeugteile (4) ausgebildet ist.

14. Arbeitsvorrichtung mit einem mehrachsigen programmierbaren Roboter (9) und einem Werkzeugwechselsystem (1), **dadurch**
**gekennzeichnet, dass** das Werkzeugwechselsystem (1) nach Anspruch 12 oder 13 ausgebildet ist und wobei der Roboter (9) als taktiler Roboter mit einer oder mehreren kraftgesteuerten oder kraftgeregelten Roboterachsen (I - VII) und mit einer zugeordneten, einwirkende Belastungen erfassenden Sensorik (17) ausgebildet ist.

15. Arbeitsvorrichtung nach Anspruch 14, **dadurch gekennzeichnet, dass** der Roboter (9) mindestens eine nachgiebige Achse (I - VII) mit einer Nachgiebigkeitsregelung, insbesondere einer reinen Kraftregelung oder einer Kombination aus Positions- und Kraftregelung, aufweist.

## Claims

1. Multipart tool (2), in particular gripping tool, having a tool part (5), in particular a base part, and an interchangeable tool part (4), in particular a gripper finger, wherein the tool (2) has a coupling device (6) having coupling elements (30, 31, 32) and a lock (7) having form-fitting locking elements (22, 23) for the coupled tool parts (4, 5), wherein the locking elements (22, 23) have a round, in particular circular cross-sectional shape matching one another, at least in the mutual engagement region (25), and wherein a first locking element (23) is in the form of a locking groove and a second locking element (22) is in the form of a locking bar that is movable, in particular slidable, transversely to its longitudinal axis.

2. Tool according to Claim 1, **characterized in that** the coupling device (6) has several form-fitting coupling elements (30, 31, 32), defining the coupling position, on the tool parts (4, 5).

3. Tool according to Claim 1 or 2, **characterized in that** the coupling elements (31, 32) are in the form of a coupling pin (31) and a coupling opening (32), which have contours that match one another with several, in particular two, axially spaced-apart defined contact points (45, 46).

4. Tool according to Claim 1, 2 or 3, **characterized in that** the locking bar (22) is assigned to the base part (5) and the locking groove (23) to the interchangeable tool part (4).

5. Tool according to one of the preceding claims, **characterized in that** the locking bar (22) is movably guided in a bar guide (35) which is inclined at an angle to the coupling axis (44) and is directed counter to the coupling direction upon coupling.

6. Tool according to one of the preceding claims, **characterized in that** the locking bar (22) is movably guided in a bar guide (35) which is in the form of a sliding guide, preferably with a guide slot.

7. Tool according to one of the preceding claims, **characterized in that** the base part (5) has a stationary or movable adapter (28, 29) for an interchangeable tool part (4).

8. Tool according to one of the preceding claims, **characterized in that** the base part (5) has a drive (27) for one or more movable adapters (28, 29), wherein the drive (27) has a sensor system for sensing movements of and/or loads on the adapter (28, 29).

9. Tool according to one of the preceding claims, **characterized in that** the adapter (28, 29) has a locking bar (22) which is held and guided in its axial direction on the adapter (28, 29) and which has, at one or both protruding ends, a stop element (36), in particular a sliding or rolling element, preferably with an upstream spacer element (37).

10. Tool according to one of the preceding claims, **characterized in that** the tool (2) has a tool part (5), in particular a base part (5), that is connectable to a handling device (9), in particular a robot, and one or more, in particular two or three, interchangeable tool parts (4), wherein the tool parts (4, 5) are couplable and lockable in a form-fitting and play-free manner.

11. Tool according to one of the preceding claims, **characterized in that** the tool (2) is in the form of a parallel gripper having two, three or more parallel interchangeable gripper fingers (4).

12. Tool change system having a multipart tool (2) and a supply (8) for an interchangeable tool part (4), wherein a coupling device (6) having a form-fitting, spring-loaded lock (7) is provided for the tool parts (4, 5) to be coupled, **characterized in that** the tool (2) is configured according to at least one of Claims 1 to 11.

13. Tool change system according to Claim 12, **characterized in that** a holder (19) for an interchangeable tool part (4) and a stop (41) for actuating a locking bar (22) are arranged at the supply (8), wherein the supply (8) is preferably in the form of a magazine with several holders (19) for different interchangeable tool parts (4).

14. Work apparatus having a multiaxial programmable robot (9) and a tool change system (1), **characterized in that** the tool change system (1) is configured according to Claim 12 or 13 and wherein the robot (9) is in the form of a tactile robot having one or more force-controlled or force-regulated robot axes (I-VII) and having an associated sensor system (17) that senses acting loads.

15. Work apparatus according to Claim 14, **characterized in that** the robot (9) has at least one flexible axis (I-VII) with flexibility regulation, in particular pure force regulation or a combination of position regulation and force regulation.

## Revendications

1. Outil en plusieurs parties (2), en particulier outil de préhension, avec une partie d'outil (5), en particulier une partie de base, et une partie d'outil interchangeable (4), en particulier un doigt de préhension, dans lequel l'outil (2) présente un système de couplage (6) avec des éléments de couplage (30, 31, 32) et un verrouillage (7) avec des éléments de verrou emboîtables (22, 23) pour les parties d'outil couplées (4, 5), dans lequel les éléments de verrou (22, 23) présentent au moins dans la région d'engagement sur les deux côtés (25) une forme de section transversale ronde adaptée l'une à l'autre, en particulier circulaire, et dans lequel un premier élément de verrou (23) est réalisé en forme de rainure de verrou et un deuxième élément de verrou (22) est réalisé sous la forme d'une tige de verrou mobile, en particulier déplaçable, transversalement à son axe longitudinal.

2. Outil selon la revendication 1, **caractérisé en ce que** le système de couplage (6) présente plusieurs éléments de couplage emboîtables (30, 31, 32) et définissant la position de couplage sur les parties d'outil (4, 5).

3. Outil selon la revendication 1 ou 2, **caractérisé en ce que** les éléments de couplage (31, 32) sont réalisés en forme de tourillon de couplage (31) et d'ouverture de couplage (32), qui présentent des contours mutuellement adaptés avec plusieurs, au moins deux, points de contact définis, axialement espacés (45, 46).

4. Outil selon la revendication 1, 2 ou 3, **caractérisé en ce que** la tige de verrou (22) est associée à la partie de base (5) et la rainure de verrou (23) est associée à la partie d'outil interchangeable (4).

5. Outil selon l'une quelconque des revendications précédentes, **caractérisé en ce que** la tige de verrou (22) est guidée de façon mobile dans un guidage de tige (35), qui est incliné en oblique par rapport à l'axe de couplage (44) et qui est orienté contre la direction de couplage lors du couplage.

6. Outil selon l'une quelconque des revendications précédentes, **caractérisé en ce que** la tige de verrou (22) est guidée de façon mobile dans un guidage de tige (35), qui est réalisé en forme de guidage coulissant, de préférence avec une fente de guidage.

7. Outil selon l'une quelconque des revendications précédentes, **caractérisé en ce que** la partie de base (5) présente un adaptateur fixe ou mobile (28, 29) pour une partie d'outil interchangeable (4).

8. Outil selon l'une quelconque des revendications précédentes, **caractérisé en ce que** la partie de base (5) présente un entraînement (27) pour un ou plusieurs adaptateur(s) mobile(s) (28, 29), dans lequel l'entraînement (27) présente des capteurs pour détecter des mouvements et/ou des mises en charge de l'adaptateur (28, 29).

9. Outil selon l'une quelconque des revendications précédentes, **caractérisé en ce que** l'adaptateur (28, 29) présente une tige de verrou (22), qui est maintenue et guidée sur l'adaptateur (28, 29) dans sa direction axiale et qui présente, sur une ou sur les deux extrémité(s) saillante(s), un élément de butée (36), en particulier un élément glissant ou roulant, de préférence avec un élément d'écartement préinstallé (37).

10. Outil selon l'une quelconque des revendications précédentes, **caractérisé en ce que** l'outil (2) présente une partie d'outil (5), en particulier une partie de base (5), pouvant être reliée à un dispositif de manipulation (9), en particulier à un robot, et une ou plusieurs partie(s) d'outil interchangeables (4), dans lequel les parties d'outil (4, 5) peuvent être couplées et verrouillées par emboîtement et sans jeu.

11. Outil selon l'une quelconque des revendications précédentes, **caractérisé en ce que** l'outil (2) est réalisé sous la forme d'un système de préhension parallèle avec deux, trois ou plus, doigts de préhension parallèles interchangeables (4).

12. Système de changement d'outil avec un outil en plusieurs parties (2) et une réserve (8) pour une partie d'outil interchangeable (4), dans lequel il est prévu pour les parties d'outil à coupler (4, 5) un système de couplage (6) avec un verrouillage à ressort par emboîtement (7), **caractérisé en ce que** l'outil (2) est réalisé selon au moins une des revendications 1 à 11.

13. Système de changement d'outil selon la revendication 12, **caractérisé en ce qu'**il se trouve à la réserve (8) un support (19) pour une partie d'outil interchangeable (4) et une butée (41) pour l'actionnement d'une tige de verrou (22), dans lequel la réserve (8) est réalisée de préférence comme magasin avec plusieurs supports (19) pour différentes parties d'outil interchangeables (4).

14. Dispositif de travail avec un robot multiaxe programmable (9) et un système de changement d'outil (1), **caractérisé en ce que** le système de changement d'outil (1) est réalisé selon la revendication 12 ou 13 et dans lequel le robot (9) est réalisé sous la forme d'un robot tactile avec un ou plusieurs axes de robot (I - VII) commandés de façon dynamique ou régulés de façon dynamique et avec des capteurs associés (17) qui détectent des charges agissantes.

15. Dispositif de travail selon la revendication 14, **caractérisé en ce que** le robot (9) présente au moins un axe flexible (I - VII) avec une régulation de la flexibilité, en particulier une pure régulation de force ou une combinaison d'une régulation de force et de position.
